# EUROPÄISCHE PATENTSCHRIFT

(11) **EP 1 271 104 B1**
(45) Veröffentlichungstag und Bekanntmachung des Hinweises auf die Patenterteilung: **23.01.2008**
(21) Anmeldenummer: 02007985.1
(22) Anmeldetag: 10.04.2002
(51) Int. Cl.: G01C 21/36

(54) **Verfahren zur Navigation eines Fahrzeuges**
Vehicle navigation method
Procédé de navigation véhiculaire

(30) Priorität: 29.06.2001 DE 10131432
(43) Veröffentlichungstag der Anmeldung: 02.01.2003
(73) Patentinhaber: ROBERT BOSCH GMBH, 70442 Stuttgart (DE)
(72) Erfinder: Hoeling, Holger, 30559 Hannover (DE); Kreft, Peter, 30966 Hemmingen (DE); Stuebner, Guido, 30455 Hannover (DE)

(56) Entgegenhaltungen:
- EP-A- 0 645 603
- EP-A- 0 849 563
- EP-A- 1 102 227
- EP-A- 1 186 866
- DE-A1- 19 858 568
- DE-A1- 19 942 847

## Beschreibung

### Stand der Technik

Die Erfindung geht aus von einem Verfahren zur Navigation eines Fahrzeugs nach der Gattung des Hauptanspruchs. Es sind Fahrzeugnavigationssysteme bekannt, die ausgehend von einer ermittelten Fahrzeugposition und einem ausgewählten Ziel eine Fahrtroute zwischen der Fahrzeugposition und dem Ziel berechnen. Die Berechnung stützt sich dabei im Allgemeinen auf eine digitale Karte eines Straßennetzes, wobei Straßenabschnitten des Straßennetzes Durchfahrtszeiten oder Fahrtwiderstände zugeordnet sind und aus der Länge des Straßenabschnitts und den Fahrtwiderständen eine Durchfahrtszeit berechnet wird. In Abhängigkeit von empfangenen Verkehrsinformationen können die Fahrtwiderstände bzw. die Durchfahrtszeiten an die aktuelle Verkehrslage angepasst werden, so dass in Abhängigkeit von der Verkehrslage eine schnellste Fahrstrecke ermittelbar ist. Änderungen der Verkehrslage während der Fahrt können jedoch dazu führen, dass eine zu Beginn ermittelte schnellste Fahrstrecke durch die geänderte Verkehrslage nun nicht mehr die schnellste Fahrstrecke ist. Einem Fahrer können daraufhin alternative Fahrstrecken vorgeschlagen werden. Z.B. ist aus der DE 199 07 418 A1 bekannt, einem Fahrer Umleitungsstrecken vorzuschlagen. Ein Fahrer muss nun eine der vorgeschlagenen Alternativrouten auswählen. Werden dem Fahrer keine weiteren Informationen zu den Fahrtrouten angezeigt und hat der Fahrer insbesondere auch keine Ortskenntnisse, muss er diese Entscheidung zufällig treffen, so dass er möglicherweise eine für ihn nicht optimale Fahrtroute auswählt. Wählt dagegen das Navigationssystem selbst eine optimale Fahrtroute, wird ein Fahrer eventuell auf eine Fahrtroute geführt, z.B. von einer Schnellstraße weg, die er nicht benutzen möchte, weil er keinen größeren Umweg in Kauf nehmen will oder weil er beispielsweise aufgrund der Witterungslage oder der Tageszeit eine breiter ausgebaute Straße vorzieht, auch wenn deren Benutzung gegebenenfalls mit einer geringfügig längeren Fahrzeit verbunden ist.

Ferner können empfohlene Umfahrungsstrecken ebenfalls nach kurzer Zeit Verkehrsbehinderungen aufweisen, da sich insbesondere bei größeren Verkehrsstockungen eine Vielzahl von Autofahrern ebenfalls für die Umfahrungsstrecke entscheiden wird. Werden nun weitere Umfahrungen dieser ersten Umfahrung vorgeschlagen, kann dies dazu führen, dass ein Autofahrer zwar durch Umfahren der ersten und der weiteren Verkehrsstörung gegenüber der bisherigen Fahrtroute Zeit einspart, hierfür aber immer längere Fahrstrecken in Kauf nehmen muss, ohne dass der Autofahrer hierüber informiert wird.

Aus der EP 0 849 563 A2 ist ein System zur bewerteten Fahrtroutenoptimierung bekannt, bei dem ein Verkehrsinformationsempfänger zum Empfangen von geeignet verschlüsselten Verkehrsnachrichten, in denen Informationen über die augenblickliche Verkehrslage enthalten sind, ausgebildet ist. Zur Darstellung von Karten umfasst das System einen Bildschirm zur Anzeige der Karten und von darin eingetragenen Routen. Unter Berücksichtigung der Verkehrsinformationen werden verschiedene, zueinander alternative Fahrtrouten bestimmt.

Die kürzeste Strecke kann dabei in rot, die Strecke mit der kürzesten zu erwarteten Reisezeit in blau und die Strecke mit dem günstigsten Kraftstoffverbrauch in grün dargestellt werden. Die Länge der Strecke, die erwartete Reisezeit und der erwartete Kraftstoffverbrauch können zusätzlich in einem eigenen Feld mit angegeben werden.

Aus der EP 0 645 603 A1 ist eine Navigationsvorrichtung für ein Landfahrzeug bekannt, bei dem mehrere Routen ermittelt und in einer Anzeige dargestellt werden. Über die Routen werden jeweils die Fahrzeit und die Streckenlänge angegeben.

Aus der EP 1 102 227 A2 ist ein Verfahren zur dynamischen Zielführung eines Kraftfahrzeugs bekannt, bei dem Informationen über eine Umfahrungsroute dann angezeigt wird, wenn ein Fahrer diese Route für eine Fahrt ausgewählt hat. Ob eine Route dem Fahrer überhaupt zur Auswahl angezeigt wird, ist von der Fahrzeit und der Länge der Alternativroute abhängig. Hierbei werden die Alternativrouten stets zu einer einzigen Hauptroute bestimmt.

Aus der nachveröffentlichten EP 1 186 866 A2 ist eine Navigationsvorrichtung bekannt, bei der in einer Anzeige verschiedene Fahrtrouten zu einem Fahrziel dargestellt werden. Hierbei werden die Fahrtdauem über die einzelnen Fahrrouten angezeigt. Ferner ist es möglich, unter Einbeziehung der aktuellen Verkehrlage ein Staurisiko zu bestimmen und dem Fahrer anzuzeigen. In das Staurisiko können zudem Erfahrungswerte aus der Vergangenheit mit einbezogen werden.

### Vorteile der Erfindung

Das erfindungsgemäße Verfahren mit den Merkmalen des Hauptanspruchs hat demgegenüber den Vorteil, dass ein Fahrer bei einer weiteren alternativen Fahrtroute stets auch über den Unterschied dieser weiteren alternativen

Fahrtroute zu einer zuvor berechneten, alternativen Fahrtroute informiert wird. Ein Fahrer kann nun entscheiden, ob er gegebenenfalls gegenüber einer bereits benutzten Umfahrung einer Verkehrsstörung noch einen zusätzlichen, weiteren Umweg akzeptieren will, um gegebenenfalls Zeit zu sparen oder einen Verkehrsstau zu vermeiden, oder ob er der bereits benutzten Umfahrung weiter folgen will.

Durch die Angabe der Unterschiede wird dem Fahrer eine Entscheidungsgrundlage für seine Fahrtroutenauswahl gegeben. Hierdurch wird die Benutzerakzeptanz der Navigationsvorrichtung erhöht.

Alternativ ist es möglich, z.B. eine Route zu wählen, die in dem Fall, dass Verkehrsmeldungen nicht berücksichtigt werden, die schnellste Route darstellt, und hierbei gewählte, gut ausgebaute Straßen zu benutzen, oder einer möglichst kurzen Fahrtroute zu folgen, z.B. um Kraftstoff einzusparen.

Besonders vorteilhaft ist, einem Benutzer den Unterschied der Fahrtdauer und/oder den Unterschied der Wegstrecke anzuzeigen, da dies objektive Kriterien sind, anhand derer ein Benutzer sehr schnell ein Urteil treffen kann und zwischen dem Komfortgedanken, also der Vermeidung eines Verkehrsstaus, einem möglichen Umweg oder einer möglichen längeren bzw. auch kürzeren Fahrtzeit abwägen kann. Wichtig für einen Benutzer ist dabei vor allem die Fahrzeit, insbesondere in dem Fall, dass für einen Benutzer Termine einzuhalten sind.

Weiterhin ist vorteilhaft, eine aktuelle Verkehrslage zu ermitteln und anhand der aktuellen Verkehrslage eine Fahrdauer für die erste, die zweite und die dritte Fahrtroute zu berechnen, wobei es hierdurch möglich ist, zusätzlich eine mögliche Ankunftszeit je nach Fahrtroute darzustellen.

Durch die in den Unteransprüchen aufgeführten Maßnahmen sind vorteilhafte Weiterbildungen und Verbesserungen des im Hauptanspruch angegebenen Verfahrens möglich. So ist es vorteilhaft, den Unterschied der Fahrtdauer und/oder der Wegstrecke jeweils nicht in absoluten Werten anzuzeigen, sondern in Abhängigkeit von der tatsächlich ermittelten Fahrtdauer und/oder Wegstrecke einen Bereich für einen Unterschied anzuzeigen. Dies ist insbesondere bei Fahrzeitberechnungen von Vorteil, da alle Fahrzeitberechnungen trotz Berücksichtigung der aktuellen Verkehrslage lediglich Prognosen sind, da die reale Fahrzeit z.B. auch von einem persönlichen Fahrverhalten des Fahrers abhängt. Somit ist es möglich, dass eine reale Fahrzeit von dieser Prognose abweichen kann. Damit die angezeigte Fahrzeit sinnvoll und vor allem für einen Benutzer auch glaubhaft ist, wird nun statt einer sehr genauen Anzeige ein geschätzter Fahrzeitunterschied angezeigt. Damit erfolgt eine Quantisierung des Fahrzeitvorteils. Wird z.B. von einer Rechenvorrichtung der Navigationsvorrichtung berechnet, dass durch die Benutzung einer weiteren Alternativroute sich ein Fahrzeitvorteil von 7 min und 11 s ergibt, so wird in einer Anzeige ein geschätzter Fahrzeitvorteil von "ca. 10 Minuten" oder von "5 bis 10 min" angezeigt. Bei einem geschätzten Fahrzeitvorteil von 2 h und 11 min wird z.B. ein Fahrzeitvorteil von "ungefähr 2 h" angezeigt. Da ein Benutzer somit realistische Angaben erhält, steigt auch die Benutzerakzeptanz für die ihm unterbreiteten Vorschläge, da die Beurteilung dieser Vorschläge erleichtert wird.

Weiterhin ist vorteilhaft, dass von einem Benutzer im Anschluß an die Anzeige der Unterschiede zwischen den Fahrtrouten eine der Fahrtrouten ausgewählt wird und dem Benutzer Fahranweisungen ausgegeben werden, so dass er anhand dieser Fahranweisungen entlang der von ihm ausgewählten Fahrtroute geführt wird.

Ferner ist vorteilhaft, dass für die Bestimmung und/oder eine automatische Auswahl eine Fahrtroute bzw. einer alternativen Fahrtroute Kriterien durch einen Benutzer vorgebbar sind. Hierdurch kann bei der Routenberechnung direkt z.B. die Einbeziehung einer touristischen Sehenswürdigkeit oder einer Einkaufsmöglichkeit in die Routenberechnung mit einbezogen werden. Ferner ist auch die Berechnung von Routen möglich, bei denen möglichst wenig Kraftstoff benötigt wird oder bei denen Straßenbenutzungsgebühren minimiert werden.

Weiterhin ist vorteilhaft, eine Berücksichtigung der Verkehrslage für die Routenberechnung zu deaktivieren. Hierdurch kann ein Benutzer entlang einer Fahrtroute geführt werden, die von der Navigationsvorrichtung im Hinblick auf die Fahrzeit oder die Verkehrslage als ungünstig bewertet wird, die der Benutzer jedoch gegebenenfalls trotz möglicher Verkehrshindernisse benutzen möchte, z.B. aus touristischen Gründen oder um Kraftstoff zu sparen. Eingaben, z.B. die Eingabe von zusätzlichen Kriterien, sind hierbei nicht erforderlich.

Weiterhin ist vorteilhaft, auch einen Unterschied der dritten, alternativen Fahrtroute zu einer ersten Fahrtroute anzuzeigen, die ohne Berücksichtigung von Verkehrsmeldungen die schnellste Route darstellen würde, auf der jetzt jedoch gegebenenfalls eine Verkehrsbehinderung die Fahrt verlängert. Hierdurch kann ein Benutzer auch entscheiden, ob die Berücksichtigung von Verkehrsmeldungen in Summe gewünscht ist, oder ob der Umweg über die dritte, alternative Fahrtroute gegenüber der ersten Fahrtroute zu weit ist.

Weiterhin ist vorteilhaft, dass die Fahrtrouten in einer Rechenvorrichtung in dem Fahrzeug berechnet werden, da hierdurch die Verkehrslage in die Berechnung aktuell einbezogen werden kann, die von Empfangsvorrichtungen im Fahrzeug zur Verfügung gestellt werden.

Weiterhin ist vorteilhaft, die Fahrtroute zumindest teilweise in einer Dienstezentrale zu berechnen, so dass im Fahrzeug entweder gar keine oder nur eine nicht an die aktuelle Verkehrslage angepasste Karte mitgeführt werden muss, während für den Fall, dass die aktuelle Verkehrslage zu einer Abweichung von der zunächst bestimmten Fahrtroute führt, diese Umfahrungsstrecke in der Dienstezentrale möglicherweise auch unter der Berücksichtigung von geplanten Fahrstrecken anderer Fahrzeuge berechnet wird.

Weiterhin ist vorteilhaft, dass vor allem bei Anknüpfungspunkten an den öffentlichen Nahverkehr auch die Benutzung anderer Verkehrsmittel in die Routenberechnung mit einbezogen wird, wenn dies von einem Benutzer gewünscht ist. Bei einem Verkehrsstau in einer Innenstadt kann z.B. auf die Benutzung eines öffentlichen, nicht straßengebundenen Verkehrsmittels, z.B. eine Bahnlinie, mit Hinweis auf einen geeigneten Parkplatz für das Kraftfahrzeug verwiesen werden.

### Zeichnung

Ausführungsbeispiele der Erfindung sind in der Zeichnung dargestellt und in der nachfolgenden Beschreibung näher erläutert. Es zeigen Figur 1 eine erfindungsgemäße Navigationsvorrichtung in Verbindung mit unterstützenden Systemen zur Durchführung des erfindungsgemäßen Verfahrens, Figur 2 eine Kartenskizze, anhand der eine Durchführung des erfindungsgemäßen Verfahrens erläutert wird, Figur 3 ein Ausführungsbeispiel für eine Durchführung des erfindungsgemäßen Verfahrens.

Beschreibung des Ausführungsbeispiels

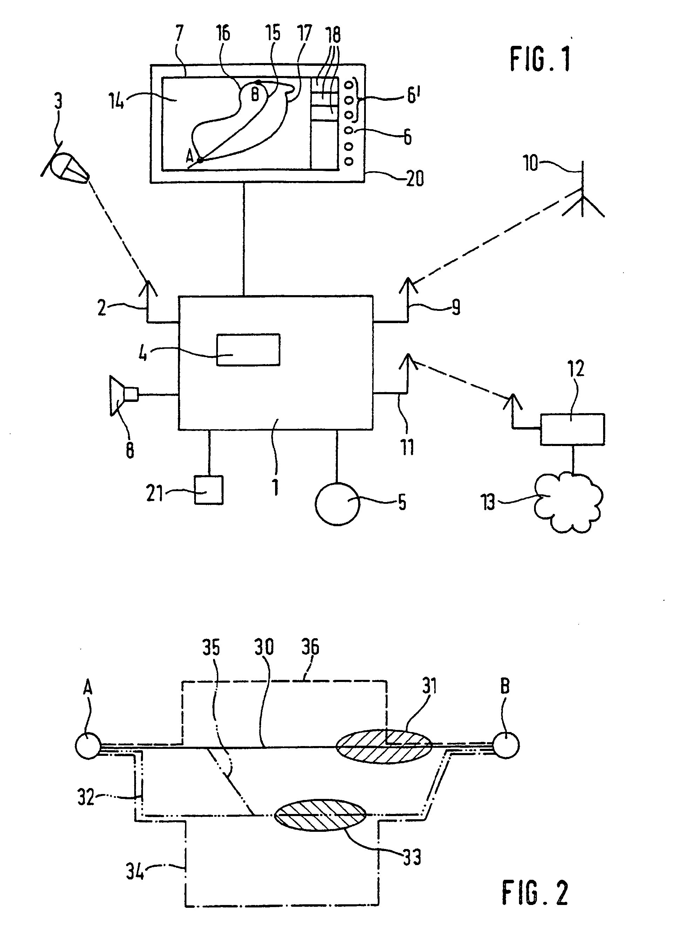

Das erfindungsgemäße Verfahren wird insbesondere für die Navigation eines Fahrzeugs, insbesondere eines Kraftfahrzeugs, in einem Straßennetz verwendet, wobei einem Fahrer Fahranweisungen zur Steuerung des Fahrzeugs in dem Straßennetz gegeben werden. In der Figur 1 ist eine Navigationsvorrichtung 1 dargestellt, bei der über eine erste Antenne 2 ein Funkkontakt zu einem oder mehreren Satelliten 3 eines Satellitenortungssystems, z.B. des GPS (Global Positioning System), hergestellt wird. Anhand der empfangenen Funksignale erfolgt durch Berechnung in einer Rechenvorrichtung 4 eine Ortung des Fahrzeugs, in dem sich die Navigationsvorrichtung 1 befindet. Die Rechenvorrichtung 4 bestimmt daraus eine Position in einer digitalen Karte, die auf einem Datenträger gespeichert ist. In einem weiteren Ausführungsbeispiel kann die digitale Karte auch von einem Diensteanbieter über eine Funkschnittstelle bereitgestellt werden. Die Rechenvorrichtung 4 kann in einem bevorzugten Ausführungsbeispiel auch auf Fahrzeugsensoren 21 für die Positionsbestimmung des Fahrzeugs zugreifen, z.B. auf einen Geschwindigkeitsmesser, einen Kompass und/oder einen Drehratensensor. Über Bedienelemente 6 ist ein Fahrziel in die Navigationsvorrichtung 1 eingebbar, wobei die Rechenvorrichtung 4 durch Zugriff auf die auf dem Datenträger in dem Datenträgerlaufwerk 5 gespeicherte digitale Karte eine Fahrstrecke von der ermittelten Fahrzeugposition zu dem eingegebenen Fahrziel bestimmt. Eine ermittelte Fahrstrecke wird in einer Anzeige 7 der Navigationsvorrichtung 1 dargestellt. Fahranweisungen werden über die Anzeige 7 an dafür vorgesehenen Positionen des Fahrzeugs ausgegeben, wobei die Position des Fahrzeugs durch die Navigationsvorrichtung 1 über die Satellitenortung und/oder die Fahrzeugsensoren 21 regelmäßig aktualisiert wird. In einem bevorzugten Ausführungsbeispiel werden Fahranweisungen akustisch über einen Lautsprecher 8 an einen Fahrer ausgegeben. Für die Bestimmung der Fahrtroute berücksichtigt die Navigationsvorrichtung 1 auch über eine zweite Antenne 9 von einem Sender 10 übermittelte Verkehrsmeldungen, z.B. TMC-Meldungen (Traffic Message Channel). Ergänzend können über die Bedienelemente 6 Verkehrsstauungen durch einen Benutzer manuell eingegeben werden. Weiterhin kann die Navigationsvorrichtung 1 über eine dritte Antenne 11 mit einer Dienstezentrale 12 Verbindung aufnehmen. Die Verbindung erfolgt vorzugsweise über eine Mobiltelefonverbindung. Die Dienstezentrale 12 ist vorzugsweise mit einem Datennetz 13, z.B. dem Internet, verbindbar, über das die Dienstezentrale 12 laufend aktuelle Verkehrsmeldungen abrufen kann. Dies können z.B. auch Daten eines Verkehrsüberwachungsnetzwerks sein. Die Navigationsvorrichtung 1 ist vorzugsweise ein in das Fahrzeug integriertes Gerät, das z.B. in die Mittelkonsole des Fahrzeugs eingebaut ist. In einem weiteren Ausführungsbeispiel kann die Navigationsvorrichtung auch als eine mobile Rechenvorrichtung ausgeführt sein, die als ein tragbarer Computer, z.B. ein tragbares Handgerät oder ein sogenannter Laptop, in das Fahrzeug gebracht wird und vorzugsweise in einer dafür vorgesehenen Halterung befestigt wird.

In der Figur 1 ist ein bevorzugtes Ausführungsbeispiel dargestellt, bei dem in der Anzeige 7 eine Kartendarstellung 14 angezeigt wird, in der verschiedene Fahrtrouten von einem Startpunkt A zu einem Zielpunkt B angezeigt werden. Die schnellste Fahrtroute 15 führt auf schnellstem Weg von A nach B, falls keine Verkehrsstörung auf ihr vorliegt. Ferner sind alternative Fahrtrouten 16, 17 in der Kartendarstellung 14 eingetragen, die Alternativen zu der schnellsten Fahrtroute 15 darstellen. Weitere Straßen außer den Fahrtrouten 15, 16, 17 sind in der Kartendarstellung 14 aus Gründen der Übersichtlichkeit der Zeichnung in der Figur 1 nicht dargestellt. In der Anzeige 7 sind weiterhin Auswahlfelder 18 angezeigt, die den neben der Anzeige 7 an einer Anzeigevorrichtung 20 angeordneten Bedienelementen 6' zugeordnet sind. In jedem Auswahlfeld 18 ist eine der Fahrtrouten 15, 16, 17 bezeichnet. Für die alternativen Fahrtrouten 16, 17 ist jeweils ein Unterschied, insbesondere ein Fahrzeitunterschied unter Berücksichtigung von Verkehrsmeldungen und/oder ein Wegstreckenunterschied, gegenüber der Fahrtroute 15 gezeigt, die ohne Berücksichtigung von Verkehrsmeldungen die schnellste Fahrtroute wäre. Über eine Auswahl mittels dem dem jeweiligen Anzeigenfeld 18 zugeordneten Bedienelement 6' kann eine der dargestellten Fahrtrouten 15, 16, 17 ausgewählt werden.

In der Figur 2 sind Fahrtrouten dargestellt, anhand derer das erfindungsgemäße Verfahren erläutert wird. Die schnellste Fahrroute 30 von einem Ort A zu einem Ort B ist die direkte Verbindung, die vorzugsweise zumindest überwiegend durch eine Schnellstraße realisiert ist. Liegen keine Verkehrsstörungen vor, so wird ein Fahrer von der Navigationsvorrichtung 1 von dem Ort A, der der Startpunkt der Fahrt sein soll, zu dem Ort B geführt. Wird nun der Navigationsvorrichtung 1 eine erste Verkehrsstörung 31 gemeldet, durch die ein bestimmter Bereich der ersten Fahrtroute 30 nur noch mit geringer Geschwindigkeit durchfahren werden kann, z.B. eine Stauung vor einer Baustelle, so wird die Navigationsvorrichtung 1 eine alternative Fahrtroute ermitteln. In dem vorliegenden Ausführungsbeispiel wird die zweite Fahrtroute 32 einem Benutzer vorgeschlagen, durch die ein Bereich der ersten Verkehrsstörung 31 vollständig umfahren werden kann. Einem Benutzer wird in der Anzeige 7 die Zeitersparnis, die der Benutzer durch die Umfahrung der ersten Verkehrsstörung 31 gewinnt, oder der Zeitmehrbedarf angezeigt, den der Benutzer für die Umfahrung gegebenenfalls in Kauf nehmen muss. Ferner wird einem Benutzer die Länge angezeigt, um die die zweite Fahrtroute 32 länger als die erste Fahrtroute 30 ist.

Der Fahrzeitvorteil bzw. -nachteil wird dabei dem Fahrer in vorteilhafter Weise durch Zeitbereiche, ungefähre Zeitangaben bzw. Quantisierungen der Zeitangaben dargestellt. Eine Unterteilung in Zeitbereiche kann z.B. in der folgenden Weise erfolgen: Weniger als 5 min, 5-10 min, 10-20 min, 20-30 min, 30-45 min, 45-60 min, 60-90 min, 1,5-2h, ungefähr 2h, ungefähr 3h, usw. Dadurch wird vermieden, dass einem Fahrer eine Genauigkeit vorgetäuscht wird, die die durch das Navigationssystem vorgenommene Fahrzeitprognose nicht leisten kann.

Im Regelfall wird sich durch die Benutzung einer Umfahrung ein Fahrzeitvorteil für den Benutzer ergeben. Gegebenenfalls kann auch der Fall auftreten, dass die für die zweite Fahrtroute benötigte Zeit länger ist als die Fahrt entlang der ersten Fahrtroute unter Berücksichtigung der Verkehrsstörung. In diesem Fall wird einem Benutzer angezeigt, welche zusätzliche Zeit er für die Umfahrung benötigt. Ein Fahrer hat nun die Auswahl, ob er der Schnellstraße, also der ersten Fahrtroute 30, trotz der ersten Verkehrsstörung 31 nach B folgen will oder ob er die möglicherweise schmälere und längere Straße entlang der zweiten Fahrtroute 32 benutzen will, auf der der Verkehr jedoch wahrscheinlich ungestört fließen kann.

Hat sich ein Fahrer für die Umfahrung der ersten Verkehrsstörung 31 entlang der zweiten Fahrtroute 32 entschieden, so kann es auf der zweiten Fahrtroute 32 ebenfalls zu einer zweiten Verkehrsstörung 33 auf der Fahrstrecke von A nach B kommen. Insbesondere da sich eine Vielzahl vor allem ortskundiger Autofahrer bei einer ersten Verkehrsstörung 31 möglicherweise für die zweite Fahrtroute 32 entscheiden werden, steigt sogar die Wahrscheinlichkeit, dass es auf einer schmäleren Straße nun tatsächlich zu einer zweiten Verkehrsstörung 33 infolge von Verkehrsüberlastung kommen kann. Die alternative, zweite Fahrtroute 32 kann dadurch während der Benutzung durch den Fahrer, sofern er nicht bereits die zweite Verkehrsstörung 33 passiert hat, nicht nur länger als die erste Fahrtroute 30 werden, sondern auch mehr Zeit beanspruchen. Durch die Navigationsvorrichtung 1 werden dann eine oder mehrere weitere Alternativrouten bestimmt, z.B. eine dritte Fahrtroute 34, die nicht nur die erste Fahrtroute 30, sondern auch die zweite Fahrtroute 32 und die darauf befindlichen Verkehrsstörungen umfährt. Ferner ist auch eine weitere alternative Fahrtroute 35 möglich, die zu einer Rückführung auf die erste Fahrtroute 30 führt, sofern ein Durchfahren der ersten Verkehrsstörung 31 günstiger ist. Gegebenenfalls kann auf noch eine weitere Fahrtroute 36 verwiesen werden, die zumindest teilweise noch durch die erste Verkehrsstörung 31 führt.

Werden nun die Unterschiede der weiteren Fahrtrouten 34, 35, 36 gegenüber der zweiten Fahrtroute 32 angegeben, kann der Fahrer beispielsweise entscheiden, ob er gegebenenfalls einen weiteren Umweg in Kauf nimmt, um sein Ziel schnellstmöglich zu erreichen, oder ob er auf der zweiten Fahrtroute verbleibt und sich damit auf einer kürzeren Strecke zu seinem Ziel führen lässt, ohne die neuen Verkehrsmeldungen zu berücksichtigen.

Der Fahrer kann sich dafür entscheiden, entweder die noch staufreie, dritte Fahrtroute 34 über eine weitere und gegebenenfalls noch schmälere Straße zu wählen, sich auf die Schnellstraße entlang der weiteren alternativen Fahrtroute 35 zurückführen zu lassen oder gegebenenfalls auf die weitere, alternative Fahrtroute 36 zu wechseln, die zumindest teilweise noch durch die erste Verkehrsstörung 31 verläuft. Vorteilhafterweise wird dabei auch der Grad der Verkehrsstörungen 31, 33 berücksichtigt, z.B. Vollsperrung, Länge des Staus, oder ob nur zähflüssiger Verkehr oder eine Sperrung z.B. nur einer Fahrbahn vorliegt. Die erreichbaren Fahrzeit-, Fahrtdauer- und/oder Komfortvorteile sind dabei von der Position abhängig, die das Fahrzeug zum Zeitpunkt der Meldung der zweiten Verkehrsstörung 33 bereits erreicht hat. Befindet sich das Fahrzeug z.B. in dem Bereich, in dem noch alle Routen parallel verlaufen, wird der Fahrzeitvorteil z.B. über die weitere Fahrtroute 36 optimal sein, bei einer Position vor dem Abzweigen der dritten Fahrtroute 34 von der zweiten Fahrtroute 32 wird gegebenenfalls die dritte Fahrtroute 34 die schnellste Fahrzeit liefern, und bei einer Position kurz vor der zweiten Verkehrsstörung 33 nach dem Abzweigen der dritten Fahrtroute 34 wird gegebenenfalls die Rückführung auf die erste Fahrtroute 30 entlang der alternativen Fahrtroute 35 eine optimale Fahrzeit zum Ort B ermöglichen. Hierüber kann der Benutzer im Fahrzeug mittels einer Eingabe über die Bedienelemente 6' entscheiden.

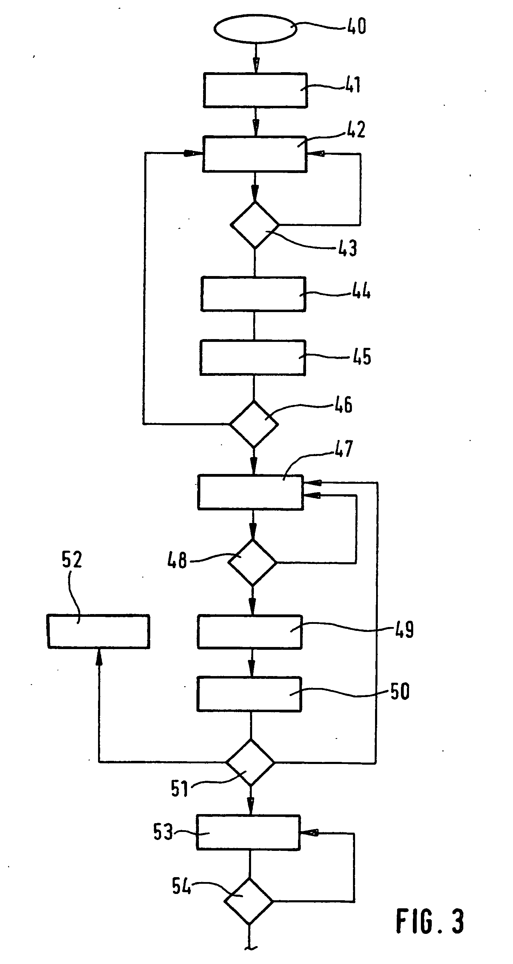

Im Folgenden ist der Ablauf eines erfindungsgemäßen Verfahrens anhand der Figur 3 erläutert. Ausgehend von einem Startschritt 40 wird die Navigationsvorrichtung 1 von einem Benutzer dazu aufgefordert, von der aktuellen Fahrzeugposition eine Fahrtroute zu einem Fahrziel zu bestimmen. In einem weiteren Ausführungsbeispiel kann das erfindungsgemäße Verfahren auch in einer dezentralen Recheneinheit erfolgen, bei der die aktuelle Fahrzeugposition manuell eingegeben werden muss, so dass als Startposition diese manuell eingegebene Position verwendet wird. An den Startschritt 40 schließt sich ein erster Berechnungsschritt 41 an, in dem unter Berücksichtigung der aktuellen Verkehrslage eine Fahrtroute von der Startposition zu dem Zielpunkt ermittelt wird. In einem folgenden, ersten Ausgabeschritt 42 werden über den Lautsprecher 8 bzw. die Anzeige 7, in der die Fahrtroute zumindest teilweise in einer Kartendarstellung 14 dargestellt wird, in Abhängigkeit von der Fahrzeugposition Fahranweisungen ausgegeben, insbesondere wenn ein Fahrer die gerade benutzte Straße durch Abbiegen verlassen muss, z.B. "nach 100 Metern rechts abbiegen". Ausgehend von dem ersten Ausgabeschritt wird in einem ersten Prüfschritt 43 überprüft, ob für die geplante Fahrtroute und eine vorgegebene Umgebung dieser Fahrtroute neue Verkehrsmeldungen vorliegen. Die vorgegebene Umgebung hängt dabei vorzugsweise von der Entfernung zwischen Startposition und Zielpunkt ab, so dass bei Fernfahrten ein größeres Gebiete überwacht wird, da bei einer Fernfahrt Fahrtrouten mit ähnlicher Länge und Dauer weiter voneinander entfernt liegen können. Wird in dem ersten Prüfschritt 43 festgestellt, dass für die entsprechende Umgebung keine neue Information vorliegt, so wird zu dem ersten Ausgabeschritt 42 zurückverzweigt, indem entsprechend der Fahrzeugposition neue Fahranweisungen ausgegeben werden. Wird dagegen in dem ersten Prüfschritt 43 festgestellt, dass eine Verkehrsmeldung vorliegt, so wird in einem zweiten Berechnungsschritt 44 eine schnellste Fahrtroute von der aktuellen Fahrzeugposition zu dem Fahrziel unter Berücksichtigung der Verkehrslage und der neu hinzugekommenen Verkehrsmeldung bestimmt. Einerseits kann sich hierbei ergeben, dass die gewählte Fahrtroute auch weiterhin die optimale Fahrtroute ist. In einem Ausführungsbeispiel kann in diesem Fall zusätzlich geprüft werden, ob ein Verkehrsstau auf der ermittelten, schnellsten Fahrtroute liegt. Ist dies der Fall, so wird eine weitere Fahrtroute ermittelt, durch die dieser Stau umgangen wird.

Kann eine alternative Fahrtroute ermittelt werden, wird in einem Anzeigeschritt 45 anschließend die schnellste und/oder eine staufreie Fahrtroute einem Fahrer angezeigt. In einem ersten Auswahlschritt 46 hat der Fahrer nun die Möglichkeit, zwischen der ursprünglich geplanten, gegebenenfalls bereits befahrenen Fahrtroute und der neu ermittelten Fahrtroute zu wählen. Hierzu werden dem Fahrer der Fahrzeitunterschied und/oder der Wegstreckenunterschied zwischen der ersten Fahrtroute und der neu ermittelten Fahrtroute angezeigt. Zusätzlich werden dem Fahrer auch Komfortunterschiede angezeigt, z.B. ob ein Verkehrsstau vorliegt, welcher Straßenzustand zu erwarten ist, z.B. eine Schneebedeckung, ob Baustellen oder eine beschädigte Fahrbahn zu erwarten sind bzw. ob Straßenbenutzungsgebühren anfallen. Durch eine Auswahl der Bedienelemente 6 bzw. 6' kann der Fahrer nun die gewünschte Fahrstrecke auswählen. Entscheidet sich der Fahrer für die ursprünglich ermittelte Fahrstrecke, so wird zu dem ersten Ausgabeschritt 42 zurückverzweigt, wobei der Fahrer nun entsprechend der ursprünglich ermittelten Fahrtroute weitergeleitet wird. Sollten neue Verkehrsmeldungen eintreffen, wird erneut eine alternative Fahrtroute ermittelt. Konnte in dem zweiten Berechnungsschritt 44 keine alternative Fahrtroute ermittelt werden, so wird von dem ersten Auswahlschritt 46 automatisch zu dem ersten Ausgabeschritt 42 zurückverzweigt und die Routenführung entlang der aktuellen Fahrtroute wird fortgeführt, indem die nächste Fahranweisung ausgegeben wird.

Entscheidet sich der Fahrer in dem ersten Auswahlschritt 46 dafür, seine Fahrt entsprechend der alternativen Fahrtroute fortzusetzen, so wird zu einem zweiten Ausgabeschritt 47 verzweigt, in dem Fahranweisungen entsprechend der zweiten, alternativen Fahrtroute an den Fahrer ausgegeben werden, so dass der Fahrer nun entlang der zweiten, alternativen Fahrtroute geführt wird, die sich gegebenenfalls zumindest teilweise mit der ersten Fahrtroute überschneiden kann. Ausgehend von dem zweiten Ausgabeschritt 47 wird zu einem zweiten Prüfschritt 48 verzweigt, in dem ebenfalls wie in dem ersten Prüfschritt 43 überprüft wird, ob nun bezüglich der zweiten Fahrtroute neue Verkehrsmeldungen vorliegen. Liegt keine neue Verkehrsmeldung vor, so wird zu dem zweiten Ausgabeschritt 47 zurückverzweigt und die Ausgabe von Fahrhinweisen entlang der zweiten Fahrtroute wird fortgesetzt. Wird dagegen in dem zweiten Prüfschritt 48 festgestellt, dass eine neue Verkehrsinformation vorliegt, so wird zu einem dritten Berechnungsschritt 49 verzweigt, in dem eine dritte, alternative Fahrtroute berechnet wird. In einem anschließenden dritten Ausgabeschritt 50 wird die alternative Fahrtroute in der Anzeige 7 dargestellt. Der dritte Berechnungsschritt 49 berücksichtigt dabei zusätzlich die neu hinzugekommenen Verkehrsmeldungen. In dem dritten Ausgabeschritt 50 wird nun die dritte, alternative Fahrtroute sowie vorzugsweise auch die zweite, alternative Fahrtroute dargestellt. Insbesondere wird ein Fahrzeitvorteil und/oder ein Wegstreckenunterschied der dritten, alternativen Fahrtroute zu der zweiten Fahrtroute angezeigt, so dass einem Benutzer ein direkten Vergleich zu der zuvor geplanten Fahrtroute angezeigt wird. Gegebenenfalls kann ergänzend auch ein Unterschied zu einer Fahrtroute angezeigt werden, die ohne eine Berücksichtigung von Verkehrsmeldungen die schnellste Route darstellen würde, so dass ein Benutzer direkt einen Vergleich zu der ursprünglich geplanten, schnellsten, ersten Fahrtroute hat.

In der Anzeige 7 kann z.B. dargestellt werden: "Fahrtroute 3 ist 5-10 min kürzer als Fahrtroute jedoch 10km länger als Fahrtroute 2". Auf dieser Basis kann der Fahrer entscheiden, ob er einen weiteren Umweg aus Gründen der Zeitersparnis wahrnehmen möchte.

In einem zweiten Auswahlschritt 51 kann der Benutzer sich nun zwischen der zweiten Fahrtroute oder der dritten Fahrtroute entscheiden. Sollte sich ein Fahrer für die dritte, alternative Fahrtroute entscheiden, so wird zu einem vierten Ausgabeschritt 53 weiterverzweigt, in dem der Fahrer entlang der dritten Fahrtroute geführt wird. In einem gegebenenfalls anschließenden dritten Prüfschritt 54 wird überprüft, ob weitere Verkehrsmeldungen eingetroffen sind. Entsprechend können sich Vorschläge weiterer alternativer Fahrtrouten anschließen. Entscheidet sich ein Benutzer dafür, die Fahrt entlang der zweiten Fahrtroute fortzusetzen, so wird zu dem zweiten Ausgabeschritt 47 zurückverzweigt, und der Fahrer wird entlang der zweiten Fahrtroute weitergeführt. Dies kann unter anderem dadurch realisiert werden, dass für die weitere Routenberechnung bereits erfasste Verkehrsmeldungen, die sich auf die zweite Fahrtroute beziehen, ignoriert werden.

In einem weiteren Ausführungsbeispiel wird einem Benutzer eine gegebenenfalls noch zu berechnende Fahrtroute angeboten, für die keine Verkehrsmeldungen berücksichtigt werden. In diesem Fall wird das erfindungsgemäße Verfahren von dem zweiten Auswahlschritt 51 zu einem Routenberechnungsschritt 52 verzweigt, in dem eine Fahrtroute ohne Dynamisierung, d.h. ohne die Berücksichtigung von Verkehrsmeldungen bei der Routenberechnung berechnet wird, insbesondere wenn die angegebene Umfahrung ihm zu weit erscheint. Ein Fahrer wird nun entlang der zuvor festgelegten Fahrtroute geführt, auch wenn diese nicht mehr die schnellste Fahrtroute ist. Ein möglicher Grund ist hierbei z.B. ein touristisches Interesse des Fahrers, der eine bestimmte Fahrtroute aufgrund ihrer Sehenswürdigkeiten benutzen möchte.

Sollte der Fahrer das Merkmal "keinen Stau" eingeben, so kann eine schnellste Fahrtroute ohne Verkehrsstau dadurch bestimmt werden, dass Streckenabschnitte, auf denen eine Verkehrsstauung vorliegt, von der Navigationsvorrichtung 1 für eine Berechnung gesperrt werden, so dass sie bei der Routenberechnung nicht mit berücksichtigt werden. In einem weiteren Ausführungsbeispiel kann durch den Fahrer vorgegeben werden, dass von dem System automatisch immer eine bezüglich der Fahrzeit optimale Fahrtroute gewählt wird. Alternativ ist auch eine Auswahl der jeweils kürzesten Route möglich. Ferner ist möglich, dass bei der Anzeige eines Auswahlfensters zur Auswahl einer optimalen Fahrtroute, sollte keine Eingabe des Benutzers erfolgen, nach 60 s ab dem Beginn der Anzeige, auf die der Benutzer vorzugsweise zusätzlich akustisch hingewiesen wird, automatisch die schnellste Fahrtroute gewählt wird.

In die optionale Kartendarstellung 14 werden die einzelnen Fahrtrouten eingetragen, so dass sich die Fahrtrouten von den übrigen dargestellten Straßen abheben. Vorzugsweise ist die aktuell befahrene Fahrtroute dabei farblich von den übrigen, alternativen Fahrtrouten ebenfalls farblich abgehoben.

Die Berechnungsschritte 41, 44, 49 können vollständig in der Rechenvorrichtung 4 im Fahrzeug, vollständig in einer Recheneinheit der Dienstezentrale 12 oder aufgeteilt zwischen dem Fahrzeug und der Dienstezentrale 12 erfolgen. Z.B. ist es möglich, die Berechnung der Fahrtroute anhand einer festen Datenbasis zu dem Datenträgerlaufwerk 5 für den ersten Berechnungsschritt 41 vorzusehen. Weitere Berechnungsschritte, bei denen die aktuelle Verkehrslage berücksichtigt wird, werden von der Dienstezentrale 12 vorgenommen, die über das Datennetz 13 oder über sonstige Informationsquellen stets die aktuelle Verkehrslage zur Verfügung hat. Falls erforderlich, werden diese alternativen Fahrtrouten dann an die Navigationsvorrichtung 1 übertragen und dem Fahrer zur Auswahl angeboten.

## Patentansprüche

1. Verfahren zur Navigation eines Fahrzeugs in einem Straßennetz, wobei eine erste Fahrtroute (30) von einem Startpunkt (A) zu einem Fahrziel (B) bestimmt wird, wobei eine zweite, alternative Fahrtroute (32) zu der ersten Fahrtroute (30) bestimmt wird, wobei eine dritte, alternative Fahrtroute (34) zu der zweiten, alternativen Fahrtroute bestimmt (32) wird, wobei ein Unterschied der dritten, alternativen Fahrtroute (34) gegenüber der zweiten, alternativen Fahrtroute (32) derart angezeigt wird, dass ein Unterschied der Wegstrecke und/oder ein Unterschied der Fahrtdauer angezeigt wird, wobei eine aktuelle Verkehrslage übermittelt wird und wobei aus der aktuellen Verkehrslage eine Fahrtdauer für die erste, zweite und dritte Fahrtroute berechnet wird.

2. Verfahren nach Anspruch 1, **dadurch gekennzeichnet, dass** in Abhängigkeit von dem Unterschied der Wegstrecke und/oder der Fahrtdauer jeweils ein Bereich für eine Wegstrecke und/oder eine Fahrtdauer ermittelt wird und dass der Bereich für die Wegstrecke und/oder die Fahrtdauer angezeigt wird.

3. Verfahren nach einem der vorhergehenden Ansprüche, **dadurch gekennzeichnet, dass** von einem Benutzer eine der Fahrtrouten ausgewählt wird und dass zu der ausgewählten Fahrtroute Fahranweisungen ausgegeben werden.

4. Verfahren nach einem der vorhergehenden Ansprüche, **dadurch gekennzeichnet, dass** eine Route unter Berücksichtigung von durch den Benutzer vorgegebenen Kriterien hinsichtlich einer Routenauswahl berechnet wird.

5. Verfahren nach einem der vorhergehenden Ansprüche, **dadurch gekennzeichnet, dass** eine Berücksichtigung einer Verkehrslage für die Routenberechnung deaktiviert wird.

6. Verfahren nach einem der vorhergehenden Ansprüche, **dadurch gekennzeichnet, dass** ein Unterschied der dritten, alternativen Fahrtroute zu der ersten Fahrtroute angezeigt wird.

7. Verfahren nach einem der vorhergehenden Ansprüche, **dadurch gekennzeichnet, dass** für die Berechnung eines Unterschieds der Fahrtdauer die Benutzung weiterer Verkehrsmittel berücksichtigt wird.

8. Verfahren nach einem der vorhergehenden Ansprüche, **dadurch gekennzeichnet, dass** die Fahrtrouten in einer Rechenvorrichtung (4) in einem Fahrzeug berechnet werden.

9. Verfahren nach einem der Ansprüche 1-7, **dadurch gekennzeichnet, dass** die Fahrtrouten zumindest teilweise in einer Dienstezentrale (12) berechnet und an das Fahrzeug übertragen werden.

10. Navigationsvorrichtung mit Mitteln zur Durchführung des Verfahrens nach einem der vorhergehenden Ansprüche in einem Kraftfahrzeug.

## Claims

1. Method for navigating a vehicle in a road network, wherein a first route (30) is determined from a starting point (A) to a destination (B), wherein a second, alternative route (32) to the first route (30) is determined, wherein a third, alternative route (34) to the second, alternative route (32) is determined, wherein a difference between the third, alternative route (34) compared to the second, alternative route (32) is indicated in such a way that a difference between the distance and/or a difference between the duration is indicated, wherein a current traffic situation is conveyed, and wherein a duration for the first, second and third routes is calculated from the current traffic situation.

2. Method according to Claim 1, **characterized in that** a range for a distance and/or a duration is determined in each case from the difference between the distances and/or the durations, and **in that** the range for the distances and/or the durations is indicated.

3. Method according to one of the preceding claims, **characterized in that** a user selects one of the routes, and **in that** travel instructions are output for the selected route.

4. Method according to one of the preceding claims, **characterized in that** a route is calculated taking into account criteria for a route selection which are predefined by the user.

5. Method according to one of the preceding claims, **characterized in that** a means of taking into account a traffic situation for the calculation of a route is deactivated.

6. Method according to one of the preceding claims, **characterized in that** a difference between the third, alternative route and the first route is indicated.

7. Method according to one of the preceding claims, **characterized in that** the use of further means of transportation is taken into account in the calculation of a difference between the durations.

8. Method according to one of the preceding claims, **characterized in that** the routes are calculated in a computing device (4) in a vehicle.

9. Method according to one of Claims 1-7, **characterized in that** the routes are calculated at least partially in a service centre (12) and transmitted to the vehicle.

10. Navigation device having means for carrying out the method according to one of the preceding claims, in a motor vehicle.

## Revendications

1. Procédé de navigation d'un véhicule dans un réseau routier selon lequel on détermine un premier trajet (30) entre un point de départ (A) et une destination (B),
on détermine un second trajet (32) alternatif par rapport au premier trajet (30),
on détermine un troisième trajet (34) alternatif par rapport au second trajet alternatif (32),
on affiche la différence entre le troisième trajet alternatif (34) par rapport au second trajet alternatif (32) de façon à afficher la différence entre la longueur du trajet et/ou la différence de la durée du trajet,
on détermine l'état actuel de la circulation et
à partir de l'état actuel de la circulation, on calcule une durée pour le premier, le second et le troisième trajet.

2. Procédé selon la revendication 1,
**caractérisé en ce qu'**
en fonction de la différence des longueurs et/ou de durées de trajets on détermine chaque fois une plage pour une longueur et/ ou une durée de trajet et on affiche la plage pour la longueur et/ou la durée du trajet.

3. Procédé selon l'une des revendications précédentes,
**caractérisé en ce que**
l'utilisateur sélectionne l'un des trajets et on émet des indications de conduite correspondant au trajet sélectionné.

4. Procédé selon l'une des revendications précédentes,
**caractérisé en ce qu'**
on calcule un trajet en tenant compte des critères prédéfinis par l'utilisateur concernant une sélection de trajet.

5. Procédé selon l'une des revendications précédentes,
**caractérisé en ce qu'**
on neutralise la prise en compte de l'état de la circulation pour le calcul du trajet.

6. Procédé selon l'une des revendications précédentes,
**caractérisé en ce qu'**
on affiche une différence du troisième trajet alternatif par rapport au premier trajet.

7. Procédé selon l'une des revendications précédentes,
**caractérisé en ce que**
pour calculer la différence de la durée du trajet on tient compte de l'utilisation d'autres moyens de transport.

8. Procédé selon l'une des revendications précédentes,
**caractérisé en ce qu'**
on calcule les trajets dans un dispositif de calcul (14) du véhicule.

9. Procédé selon l'une des revendications 1 à 7,
**caractérisé en ce qu'**
on calcule les trajets au moins en partie dans une centrale de service (12) et on les transmet au véhicule.

10. Dispositif de navigation comportant des moyens pour mettre en oeuvre le procédé selon l'une des revendications précédentes dans un véhicule automobile.
